# EUROPEAN PATENT APPLICATION

(11) **EP 2 138 432 A2**
(43) Date of publication of application: **30.12.2009**
(21) Application number: 09160752.3
(22) Date of filing: 20.05.2009
(51) Int. Cl.: B65G 29/00, B65G 47/84

(54) **Star-wheel apparatus for transferring containers**

(30) Priority: 17.06.2008 IT PD20080176
(71) Applicant: Gruppo Bertolaso S.p.A., 37040 Zimella (Verona) (IT)
(72) Inventor: Canteri, Luca, I-37129, VERONA (IT); Rambaldi, ENRICO, I-37036, VERONA (IT)
(74) Representative: Gallo, Luca

(57) **Abstract**

Apparatus for transferring containers, which comprises a plurality of recesses (3) which are equally spaced from each other and formed on at least two plate-like segments, being provided on the outer profile with said recesses (3), said segments having an inner profile which can be removably connected by means of first retaining means (9) to the peripheral edge of the central body of the apparatus.

## Description

### Field of application

The present invention concerns an apparatus for transferring containers, in particular bottles or the like, according to the preamble of Claim 1.

The apparatus in question is intended to be advantageously used in plants for bottling beverages such as wine, mineral water, etc., in order to transfer the containers between two or more operating machines. As is known, a bottling plant typically comprises a rinsing machine, a filling machine and a corking or capping /capsuling machine, or also a labelling machine and a packaging machine.

The containers must be transported between the various machines in order to perform the complete bottling cycle. For this purpose, at present spiral conveyors, conveyor belts as well as apparatus generally referred to by the term "star-wheels" in the technical jargon of the sector are used, these forming the subject of the present invention.

Therefore, the apparatus in question is classifiable within the sector relating to the industry for bottling alimentary liquids such as wine, mineral water, spirits and beverages in general.

### Background art

As mentioned above, the industrial bottling plants traditionally available on the market use apparatus for transferring the bottles between the different operating machines, such as conveyor belts, spiral conveyors and conveying star-wheels.

In greater detail, a modem bottling plant, in particular for bottling alimentary products, generally comprises a rinsing machine, in which the containers are washed and sterilized, a filling machine, where the alimentary liquid is transferred from a storage tank into the container, and a corking or capping machine, where the container is hermetically sealed.

Furthermore a capsuling machine, labelling machine, packaging machine, and other complementary machines, may also be provided downstream.

The above-mentioned machines are connected so as to form a single production line by means of the aforementioned conveying apparatus. In greater detail, the containers reach the plant usually in a line by means of conveyor belts and spiral conveyors and are then transferred to the individual machines by means of star-wheel apparatus which are synchronized with the machines so that the position of each container corresponds exactly to the position of the operating component of the machine. The machines generally comprise a rotating carousel on the periphery of which a plurality of operating heads are mounted. Depending on the machine in question, the heads may be for example: rinsing heads, filling heads, corking/capping heads, capsuling heads, labelling heads, rolling heads or other operating heads.

At the outlet of a machine, the container is transferred by means of other conveying apparatus to the next machine so that the container gradually travels along the entire line of the bottling plant.

During transfer between two different operating machines, or between a spiral conveyor and an operating machine, the bottles, or more generally the containers, are received inside the recesses of the star-wheel apparatus which transfers them to the take-up means of the downstream machine, for example consisting of grippers or simple support plugs.

The recesses normally have semi-circular surfaces which are convex towards the centre of the disc and suitable for mating with the shape of the containers to be conveyed.

Obviously, during transfer between one machine and another, synchronism must be ensured so that the relative position of the bottle and the operating head of the machine is always maintained. In order to achieve this, the recesses of the star-wheels and the other conveying and the guiding parts have a size and shape corresponding to the size and shape of the containers.

Marketing requirements, however, are such that companies who produce bottled products (in particular in the sector of spirits, distilled products, etc., but also beverages) are increasingly obliged to use bottles with a different format, different size and, in some cases, also elaborate designs, in order to attract greater attention and interest on the part of consumers.

As a result, therefore, it may happen that, in order to satisfy these marketing requirements, production is performed in small batches or with frequent changes in the bottle formats. There therefore exists a particularly urgent need in the sector of the bottling industry to ensure a high degree of flexibility during production change-overs for different bottle formats.

Usually, in the present bottling plants, each production change-over for a container format requires a variation in the set-up of the line so as to adapt it to the new format. This modification in the plant set-up may be fairly complex and may require manual adjustment of all the container guiding and conveying devices, as well as replacement of the star-wheel conveyor apparatus for transferring the containers between the different operating machines.

The adjustment operations are usually complex and necessarily require direct action on the part of the operator and in particular result in a prolonged stoppage of operation along the line.

In order to overcome these drawbacks, recently so-called variable-format star-wheels have been introduced onto the market, these machines being provided with two pairs of parallel disc-shaped plates, more specifically a top plate and bottom plate, which define around their peripheral contour the aforementioned plurality of recesses.

Each pair of disc-shaped plates has, arranged between them, a spacer disc which supports a disc-shaped cam connected by means of separate pins to the two disc-shaped plates such that, by rotating the cam with the aid of a knob, the relative angular position of the discs of each pair of disc-shaped plates is staggered and consequently the shape of the recesses is varied.

An example of a variable-format star-wheel is described, for example, in patent application IT VI2003A000162.

With these variable-format star-wheels it is possible to adjust the shape of the recesses to a degree which is not always satisfactory. Consequently, albeit less frequently compared to fixed-format star-wheels, variable-format star-wheels must be replaced with other models which have differently shaped recesses in order to convey containers with different or specific formats.

This results in the drawback of having to keep in stock star-wheels with different formats in order to meet varying production requirements as regards the container formats.

A further drawback consists in the fact that the star-wheel replacement operations are somewhat laborious and are rendered particularly difficult owing to the weight of the star-wheels which must be handled during the replacement operation.

### Disclosure of the invention

The problem forming the basis of the present invention is therefore that of overcoming the drawbacks in the known types of bottling plants by providing a an apparatus for transferring containers, which can be adapted so as to convey containers of different shape and size, without having to perform long and complex component replacement and/or setting-up operations.

A further object of the present invention is to provide an apparatus for transferring containers, able to be used to supply different bottling plant machines such as rinsing machines, filling machines, corking/capping machines, etc.

A further object of the present invention is to provide an apparatus for transferring containers which is constructionally inexpensive to produce and operationally entirely safe and reliable.

Another object of the present invention is to provide an apparatus for transferring containers such that only low-weight and small-size components need be kept in stock.

### Brief description of the drawings

The technical features of the invention, in accordance with the above-mentioned obj ects, may be fully understood from the contents of the claims below and the advantages thereof will emerge more clearly from the detailed description which follows, provided with reference to the accompanying drawings, which show a purely exemplary and non-limiting embodiment thereof, where:

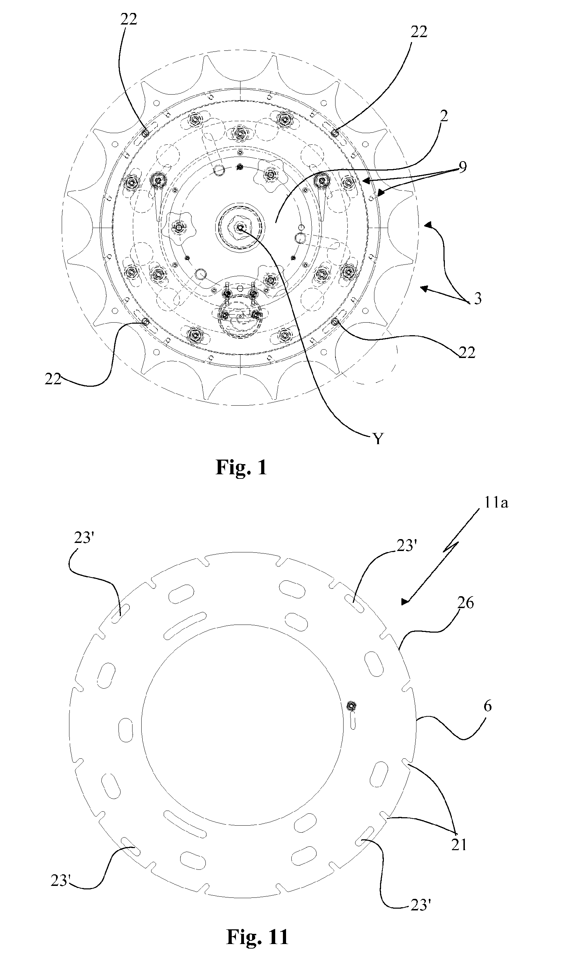

- Fig. 1 shows a plan view of an apparatus for transferring containers in bottling plants, according to the present invention;
- Fig. 2 shows a cross-sectional view of the apparatus according to Figure 1 along the line II-II;

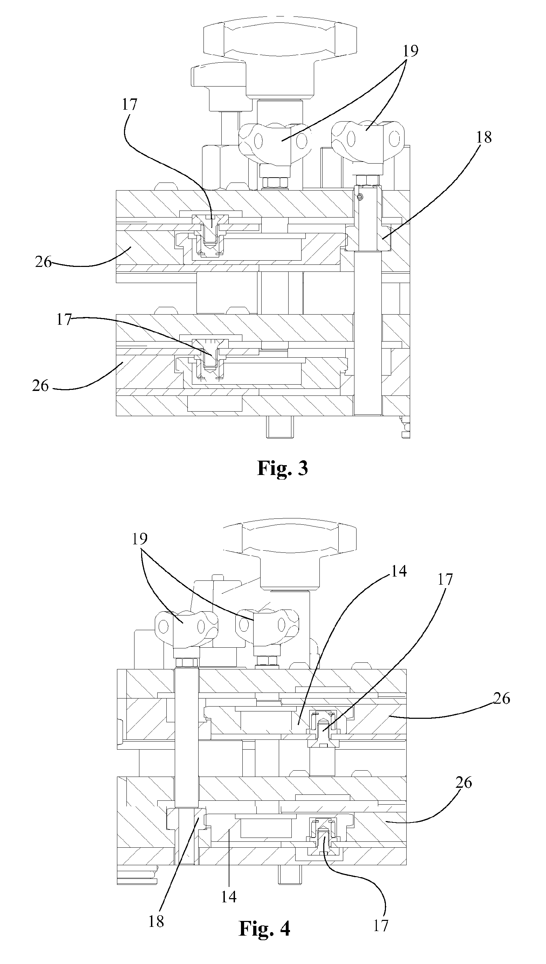

- Fig. 3 shows a cross-sectional view of a detail of the apparatus according to Figure 1 along the line III-III;
- Fig. 4 shows a cross-sectional view of a further detail of the apparatus according to Figure 1 along the line III-III;

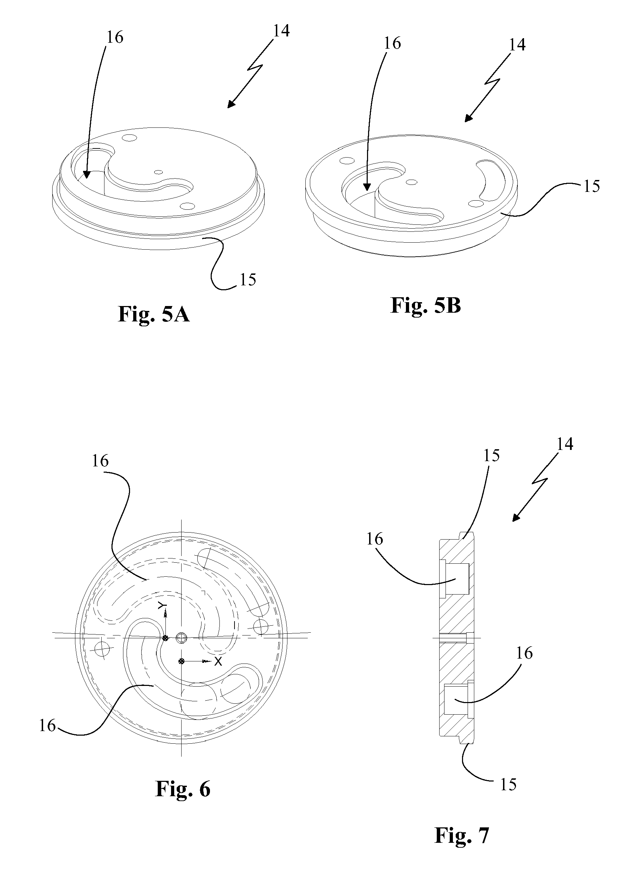

- Figs. 5A and 5B show two perspective views of an enlarged detail of the apparatus according to the invention, relating to a cam;
- Fig. 6 shows a plan view of the cam according to Figures 5A and 5B;
- Fig. 7 shows a cross-sectional view of the cam according to Figure 6 along the line VII-VII;

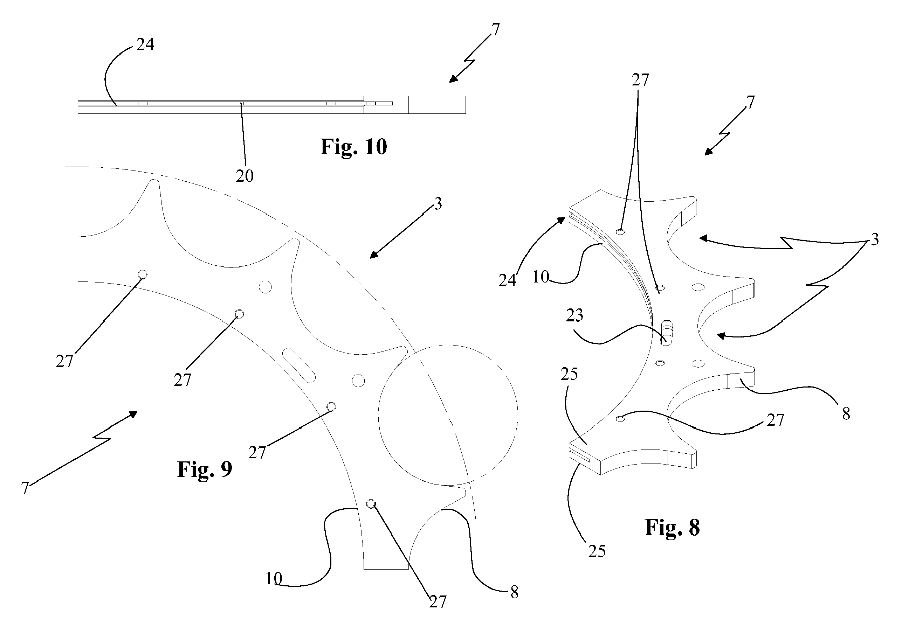

- Fig. 8 shows a perspective view of an enlarged detail of Figure 1, relating to a removable peripheral segment;
- Figs. 9 and 10 show, respectively, a plan view and side view of the segment according to Figure 8;
- Fig. 11 shows a plan view of a detail of the apparatus according to the present invention, relating to a disc-shaped plate;
- Fig. 12 shows an exploded perspective view of an adjustable conveyor which can be mechanically and operationally associated with the apparatus according to the invention;
- Figs. 13 and 14 show, respectively, a side view and a plan view of the conveyor according to Figure 12;
- Fig. 15 shows schematically a perspective view of the relative arrangement of the conveyor and the apparatus.

### Detailed description of a preferred example of embodiment

With reference to the accompanying drawings 1 denotes in its entirety the apparatus for transferring containers in bottling plants, according to the present invention.

Said apparatus is intended to convey the containers of varying shape and size, for example consisting of glass or plastic bottles, between the different operating machines which usually make up an industrial bottling plant, these usually including a rinsing machine, for washing and sterilizing the containers, a filling machine, by means of which the liquid product is transferred from a storage tank into the containers, and a corking or capping/capsuling machine for hermetically sealing the containers and, where appropriate, along more complete lines, also a labelling machine and a packaging machine as well as other complementary machines.

The apparatus 1 comprises a substantially cylindrical support structure 2 provided peripherally with a plurality of recesses 3 equally spaced from each other for containing and guiding the containers (not shown) along at least one circumferential arc where they pass between a receiving position and a release position.

A motor-driven shaft 4 with a vertical axis Y is fixed centrally underneath the support structure 2 so as to cause rotation of the structure and therefore the recesses 3.

Each recess 3 has a shaped form which is convex towards the centre of the apparatus and suitable for mating with the shape of the containers to be conveyed.

According to the idea forming the basis of the present invention, the support structure 2 is formed by a central body 5 which is fastened to the motor-driven shaft 4 and along the curved peripheral edge 6 of which two or more plate-like segments 7 may be removably mounted, said segments being preferably made of plastic with a low coefficient of friction and with recesses 3 formed along their outer profile 8. The segments 7 may be interchanged with other segments which have recesses 3 with a different shape and/or size.

First retaining means 9 are provided for removably connecting the curved inner profile 10 of the segments to the peripheral edge 6 - also curved - of the central body 5.

The first retaining means 9 advantageously comprise a plurality of pins 20 which are fixed along the inner profile 10 of the plate-like segment 7 and can be engaged inside corresponding grooves 21 which are parallel to each other and formed extending from the peripheral edge 6 of the central body 5.

The first retaining means 9 also comprise at least one pin 22 which can be engaged inside aligned through-openings 23, 23' respectively formed in superimposed portions of the plate-like segment 7 and the central body 5 along the respective inner profile 10 and peripheral edge 6.

Preferably, the above-mentioned superimposed portions are obtained by providing on the inner profile of each segment 7 an annular slit 24 which is defined between two opposite lips 25 and inside which a matching protrusion 26, projecting radially from the peripheral edge 6 of the central body 5, engages. The pins 20 are vertically press-fitted into two through-holes 27 formed along the lips 25 perpendicularly with respect to the plane defined by the plate-like segments 7.

The through-openings 23, 23' for insertion of the pin 22 are formed both in the lips 25 and in the protrusion 26 so as to mechanically fasten the plate-like segments 7 together to the central body 5.

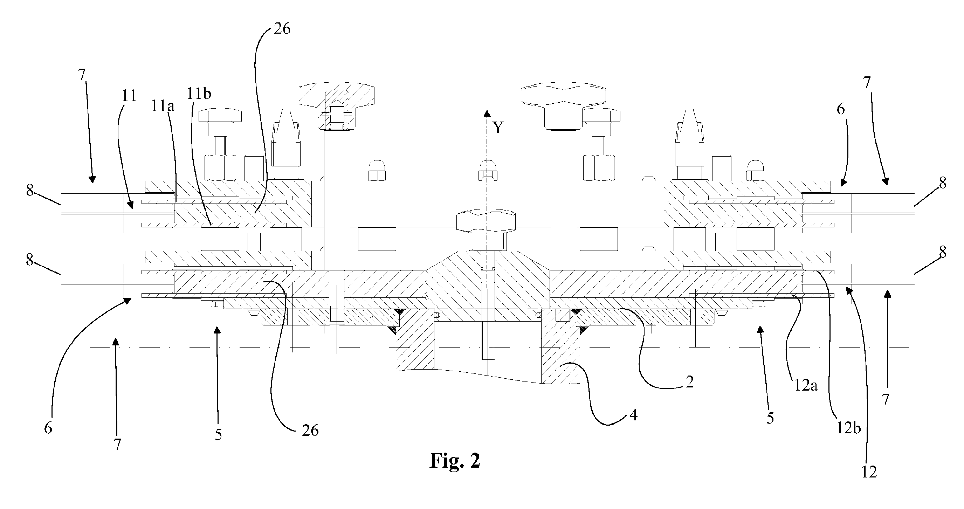

In accordance with a preferred embodiment of the present invention, the recesses 3 have a variable form and, for this purpose, the support structure 2 comprises at least two mutually parallel and spaced discs (see spacers 30 in Figure 2), i.e. a top disc 11 and a bottom disc 12.

Each disc 11a, 11b, 12a, 12b of each pair of discs 11 and 12 removably supports on its peripheral edge 6 a corresponding plate-like segment 7 which has recess-shaped zones 3' formed externally and can be moved relative to the other disc of the same pair so as to adjust the size of the recesses 3 defined by the recess-shaped zones 3' of the pairs of discs 11, 12.

The discs 11a, 11b, 12a, 12b of each pair of discs 11 and 12 are separated from each other by a separator disc 13.

The separator discs 13 are rigidly connected together and to the support structure 2 by means of axial fixing means, known per se, such as screws 31.

The said support structure seats a disc-shaped cam 14 which has externally a toothing 15 and, internally, on opposite sides, two tracks 16 inside which respective pins 17 slidably engage, said pins being rotatably mounted on the opposite surfaces of the two discs 11a, 11b, 12a, 12b of each pair of discs 11 and 12.

A pinion 18, pivotably mounted on the stem of an adjusting knob 19, for example of the wing-nut type, is engaged with the toothing 15 of the disc-shaped cam 14.

Operationally speaking, by operating the adjusting knob 19 it is possible to cause rotation of the cam 14 about its axis and therefore rotate the discs of the pair of discs associated with the cam 14, in opposite directions, causing adjustment in the size of the recesses 3 by means of greater or lesser staggering of the recess-shaped zones formed peripherally in the discs of the aforementioned pair of discs.

In the example shown in the accompanying figures, adjustment of the two pairs of discs 11, 12 is performed by means of two separate adjusting knobs 19. However, it is possible to rotationally operate the disc-shaped cams 14 associated with the two pairs of discs 11, 12 by means of a single knob having two pinions 18 keyed onto the stem so as to mesh with the toothing 15 of the two cams 14.

With reference to the example illustrated of an apparatus 1 with variable-size recesses, the grooves 21 are directly formed on the outer peripheral edge 6 of the discs, which with its thickness defines, along the last section, the protrusion 26 which engages inside the annular slit 24 of the segment 7.

The pins 22 engage inside through-openings 23, 23' which are formed aligned on the lips 25 of the inner profile 10 of the segments 7 and on the outer peripheral edge 6 of the discs 11a, 11b, 12a, 12b.

The through-openings 23 formed on the lips 25 of the plate-like segments 7 are in the form of holes which have the same size as the diameter of the pins 22, with play being envisaged only so as to allow easy insertion of the said pins 22. Differently, the openings 23' provided on the outer peripheral edge 6 of the discs 11a, 11b, 12a, 12b are in the form of circumferentially elongated eyelets so as to allow the pins 22 to slide inside them during adjustment of the width of the recesses 3 by means of operation of the knobs.

Mechanically speaking, engagement of the pins 20 inside the grooves 21 of the discs 11a, 11b, 12a, 12b allows transmission of the rotational driving movement from the discs to the plate-like segments 7 and therefore causes the feeding movement of the containers. The pins 22, instead, prevent radial displacement of the plate-like segments 7.

The aligned position of the openings 23, 23' is reached only when the segments are correctly inserted with the pins 20 at the bottom of the grooves 21.

Preferably, the number of plate-like segments 7 ranges between 3 and 5 and is advantageously equal to 4. In fact, in the case of only two plate-like segments 7, the outermost grooves 21, namely those situated in the vicinity of the adjacent plate-like segment 7, would be too shallow, having to remain parallel to the more central grooves with the consequence of being mechanically not very strong.

Operationally speaking, whenever it is required to modify the shape of the recesses beyond that which is possible by means of adjustment of the relative position of the discs 11a, 11b, 12a, 12b by means of operation of the knobs 19, the pins 22 are extracted from the through-openings 23, 23', all the plate-like segments 7 are separated from the discs 11a, 11b, 12a, 12b, extracting the pins 20 from the grooves 21, and the extracted segments are replaced with others having differently shaped recesses, before engaging the pins 22 again inside the openings 23, 23'.

Advantageously, the pins 22, once extracted, are re-positioned inside temporary seats 28 formed as aligned holes in the plate-like segments 7 of all the discs 11a, 11b, 12a, 12b, in a more outer lying position than the openings 23, 23' so as not to interfere with the said discs 11a, 11b, 12a, 12b. Owing to said insertion of the pins 22 inside the temporary seats 28, it is possible to fix rigidly together the four superimposed plate-like segments of the discs and then perform simultaneous extraction of all the superimposed plate-like segments 7 associated with the four discs 11a, 11b, 12a, 12b of the two pairs of discs 12.

The shapes of the recesses 3' formed in the various plate-like segments 7 may vary depending on the need to convey containers also with markedly different forms. However, the relative position of the aforementioned shaped zones 3' remains the same so as to allow the series of recesses 3 to remain in synchronism with the operating heads of the machine with which the apparatus is associated, even after the plate-like segments 7 have been replaced.

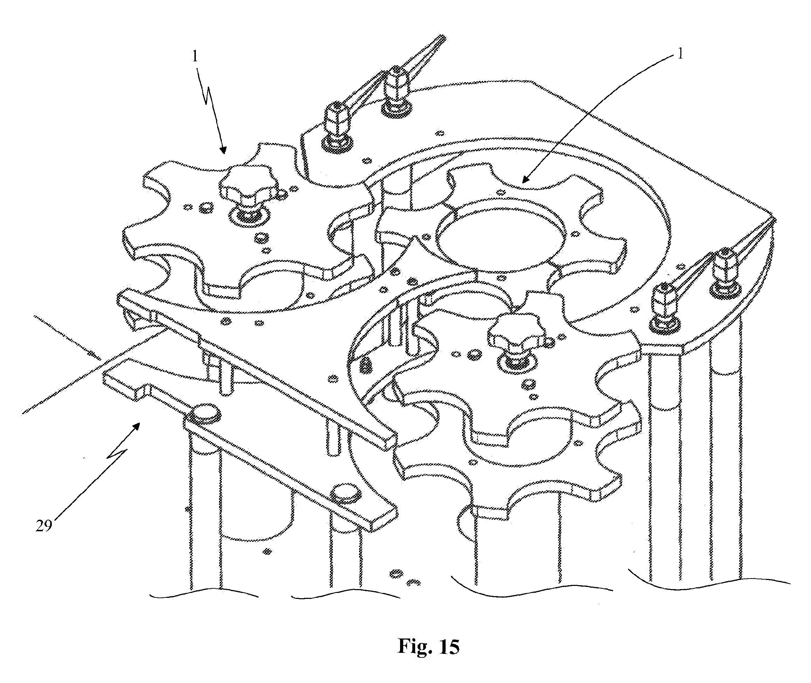

The containers pushed by the recesses during their circular motion must be guided on the outside of the apparatus 1 by special conveyors 29 as shown schematically in Figure 15.

Advantageously, the conveyor 29, which can be arranged alongside the apparatus so as to define together with the recesses 3 a guide for conveying the containers, has a support structure 30 provided with at least one shoulder 31 - indicated in broken lines - which has a curved outer profile and which is removably mounted on one side of the support structure 30 by means of second retaining means 32.

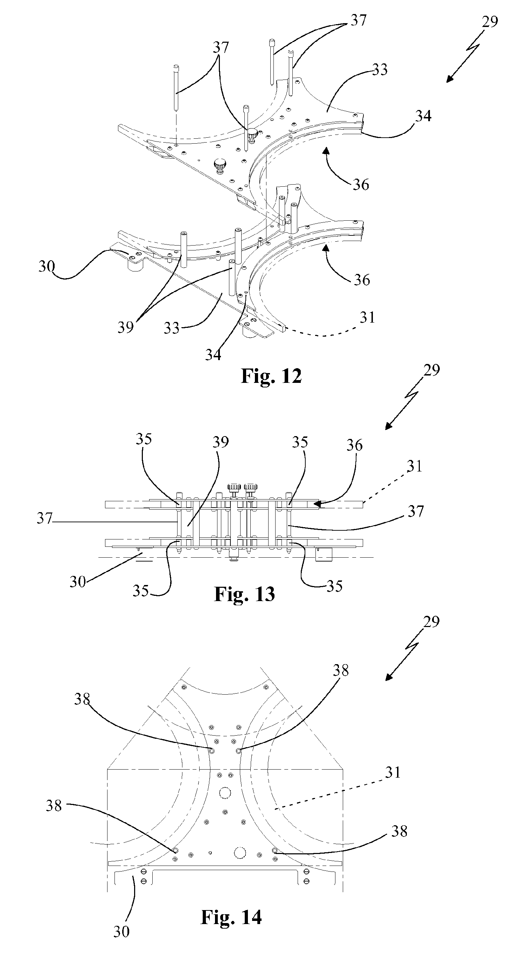

In accordance with the embodiment shown in Figures 12, 13, 14, two shoulders 31 are provided on two substantially opposite sides of the support structure 30, associated with two respective apparatus 1, for example being able to guide the incoming and outgoing containers to and from an operating machine. For this purpose, the aforementioned second retaining means 32 comprise on each side of the structure 30 two pairs of opposite plates 33, 34 which are spaced from each other by first spacing elements 35.

Each of the pairs of plates 33, 34 defines an elongated seat 36 able to receive an inner portion of the plate-like shoulder 31 which is then removably retained in the position reached, inserted inside the seat 36, by means of two or more second pins 37 which can be inserted inside corresponding through-holes 38 provided aligned on the plates 33, 34 and on the inner portion of the plate-like shoulders 31.

The two pairs of plates 33, 34, the bottom one of which of the bottom pair of plates forms the base of the support structure 30 and the top one of which of the top pair of plates forms the top closing surface of the pair of plates, are separated from each other by second spacers 39 which are advantageously in the form of tubular bodies.

Therefore, the shoulders 31 may be replaced with other differently sized shoulders by simply extracting the second pins 37 from the through-holes 38 and then extracting the shoulders 31 themselves from the elongated seats 36, so as to replace them with other new shoulders which, once inserted inside the seats 36, will in turn be fixed, by repositioning the second pins 37 inside the through-holes 38.

The invention thus conceived therefore achieves the predefined obj ects.

Obviously it may assume, in its practical embodiment, also forms and configurations different from that illustrated above without thereby departing from the present scope of protection. Moreover all the details may be replaced by technically equivalent elements and the forms, dimensions and materials used may be of any nature according to requirements.

## Claims

1. Apparatus for transferring containers, which comprises a support structure provided peripherally with a plurality of recesses equally spaced from each other for containing and guiding containers along at least one circumferential arc between a receiving position and a release position;
a motor-driven shaft with a substantially vertical axis, which is centrally fixed to said support structure so as to cause rotation thereof about said axis;
**characterized in** the said support structure comprises at least one central body fastened to said motor-driven shaft and at least two plate-like segments provided with an inner profile which can be removably connected by means of first retaining means to the peripheral edge of said central body and an outer profile with, formed therein, a corresponding subdivision of said plurality of recesses, which can be arranged continuously alongside the recesses of the circumferentially adjacent segment.

2. Apparatus for transferring containers according to Claim 1, **characterized in** the said first retaining means comprise a plurality of pins fixed along the inner profile of said segment and able to be engaged inside corresponding grooves formed along the peripheral edge of said central body.

3. Apparatus for transferring containers according to Claim 2, **characterized in** the said grooves extend from the peripheral edge of said central body parallel to each other.

4. Apparatus for transferring containers according to any one of the preceding claims, **characterized in that** said first retaining means comprise at least one pin which can be engaged in aligned through-openings formed on superimposed portions of said segment and said central body along the respective inner profile and peripheral edge.

5. Apparatus for transferring containers according to Claim 4, **characterized in that** the inner profile of each said segment has an annular slit defined between two opposite lips and able to receive a correspondingly shaped protrusion projecting radially from the peripheral edge of said central body, said through-openings being formed in said lips and said protrusion.

6. Apparatus for transferring containers according to Claims 2 and 5, **characterized in that** said pins are mounted press-fitted inside holes perpendicular to the plane of said segments formed along said lips.

7. Apparatus for transferring containers according to any one of the preceding claims, **characterized in that** said recesses have a variable form, said support structure comprising at least two pairs of discs, each of said discs being movable with respect to the other one and removably connected by means of its peripheral edge to the inner profiles of said at least two corresponding segments.

8. Apparatus for transferring containers according to Claim 7, **characterized in** the each said pair of discs is separated by a separator disc which seats a disk-shaped cam having externally a toothing and internally on opposite sides two tracks inside which respective pins rotatably mounted on opposite surfaces of the two discs of each said pair of discs slidably engage and **characterized in that** it comprises at least one pinion which is engaged with the toothing of said disk-shaped cam and can be operated so as to cause rotation of said cam about its axis and consequently rotate the discs of at least one said corresponding pair of discs in opposite directions of rotation.

9. Apparatus for transferring containers according to Claims 5 and 8, **characterized in that** said pins engage inside through-openings formed with a precision fit as holes on the opposite lips of said segments and inside circumferentially elongated eyelet openings formed in the vicinity of the outer peripheral edges of said discs, said pins sliding inside said eyelet openings during adjustment of the aperture of said recesses by means of operation of said pinions.

10. Apparatus for transferring containers according to Claim 1, **characterized in that** said plate-like segments are between 2 and 5 in number.

11. Apparatus for transferring containers according to Claim 2, **characterized in that** the superimposed plate-like segments of all said discs comprise temporary seats not affecting said discs and able to receive said pins extracted from the openings so as to rigidly fix together said superimposed plate-like segments and allow simultaneous extraction thereof.

12. Conveyor for the apparatus according to any one of the preceding claims, which can be arranged alongside said apparatus so as to define together with said recesses a guide for conveying said containers, which conveyor comprises a support structure provided with at least one shoulder with a curved outer profile, which can be removably mounted on one side of said support structure by means of second retaining means.

13. Conveyor according to Claim 12, **characterized in that** said second retaining means comprise a first pair of spaced opposite plates defining between them an elongated seat on one side, able to receive an inner portion of said plate-like shoulder, and two or more second pins which can be inserted in corresponding through-holes provided aligned on the said plates and on the inner portion of said shoulder.

14. Conveyor according to Claim 13, **characterized in that** one side of said support structure is provided with two pairs of plates separated from each other by spacers, each of which defining a said elongated seat for supporting a corresponding shoulder by means of said second retaining means.

15. Conveyor according to Claim 14, **characterized in that** said support structure is provided with two sides which are substantially oriented in opposite directions and each of which is associated with two said elongated seats so as to support corresponding shoulders.
